# EUROPEAN PATENT SPECIFICATION

(11) **EP 2 251 374 B1**
(45) Date of publication and mention of the grant of the patent: **29.08.2012**
(21) Application number: 09716879.3
(22) Date of filing: 02.03.2009
(51) Int. Cl.: C08L 9/00, B60C 1/00, C08L 7/00, C08L 67/06, C08L 9/06, C08L 21/00

(54) **RUBBER COMPOSITION COMPRISING RICINOLEIC ACID (CO)POLYMER RUBBER, AND USE THEREOF**
KAUTSCHUKZUSAMMENSETZUNG MIT RICINOLSÄURE-(CO)POLYMERKAUTSCHUK UND VERWENDUNG
COMPOSITION DE CAOUTCHOUC COMPORTANT UN CAOUTCHOUC (CO)POLYMÈRE D'ACIDE RICINOLÉIQUE ET SON UTILISATION

(30) Priority: 03.03.2008 JP 2008052727
(43) Date of publication of application: 17.11.2010
(73) Proprietor: Mitsui Chemicals, Inc., Tokyo 105-7117 (JP)
(72) Inventor: EBATA, Hiroki, Ichihara-shi Chiba 299-0108 (JP); ARINO, Mitsunao, Ichihara-shi Chiba 299-0108 (JP)
(74) Representative: HOFFMANN EITLE
(86) International application number: PCT/JP2009/053885
(87) International publication number: WO 2009/110432

(56) References cited:
- EP-A1- 1 757 658
- EP-B1- 1 294 581
- WO-A1-96/19532
- WO-A1-2008/029805
- JP-A- 2 296 843
- JP-A- 8 253 520
- JP-A- 9 118 786
- JP-A- 59 126 443
- JP-A- 62 290 740
- JP-A- 2004 269 684
- JP-A- 2005 120 183
- JP-A- 2006 131 718
- DATABASE WPI Week 198435 Thomson Scientific, London, GB; AN 1984-216270 XP002623188, & JP 59 126443 A (SUMITOMO RUBBER IND LTD) 21 July 1984 (1984-07-21)
- HIROKI EBATA, KAZUNOBU TOSHIMA, SHUICHI MATSUMURA: "Lipase-Catalyzed Synthesis and Curing of High-Molecular-Weight Polyricinoleate", MACROMOLECULAR BIOSIENCE, vol. 7, no. 6, 31 May 2007 (2007-05-31), pages 798-803, XP002623189, DOI: 10.1002/mabi.200700018
- ZORAN S. PETROVIC, IVANA CVETKOVIC, DOOPYO HONG, XIANMEI WAN, WEI ZHANG, TIM ABRAHAM, JEFF MALSAM: "Polyester Polyols and Polyurethanes from Ricinoleic Acid", JOURNAL OF APPLIED POLYMER SCIENCE, vol. 108, 23 January 2008 (2008-01-23), pages 1184-1190, XP002623190,

## Description

### FIELD OF THE INVENTION

The present invention relates to rubber compositions containing ricinoleic acid (co)polymers and uses thereof. In more detail, the invention relates to rubber compositions capable of giving crosslinked rubber products having excellent flexibility.

### BACKGROUND OF THE INVENTION

Natural rubbers (NR) and styrene butadiene rubbers (SBR) have excellent strength properties and rubber elasticity, finding a wide range of applications including automobile tires, hoses and tubes. SBR are the most frequent synthetic rubber materials because of their uniform quality enabled by synthetic production, as well as the inexpensiveness thereof. To improve properties, SBR are often blended with various kinds of elastomers.
In particular, the blending with elastomers is frequent for tire materials because the materials require different performances depending on which tire parts they are used for and further because use conditions are variable. For example, treads that have direct contact with the road require high break strength and abrasion resistance, and NR and SBR used therefor are frequently blended with BR. Further, tires designed for use in cold districts are blends of NR and BR which has excellent low-temperature properties (Non-patent Document 1). Performances of rubbers which are blended with elastomers are greatly affected by the compatibility or vulcanization properties (co-vulcanization properties) of the rubbers. The elastomer blending brings about drastic changes in flexibility, strength properties and fatigue properties. For example, blending NR, SBR or BR with other rubbers such as EPDM and NBR can result in problems such as deteriorations in flexibility, low-temperature properties and mechanical strength.
Further, many of the rubber materials are compounded with reinforcing agents such as carbon black and silica. Furthermore, plasticizers (softeners) are essentially added in order to control the viscosity of the rubber compositions (compounds) or to control properties of the obtainable shaped articles such as hardness and tensile modulus. Plasticizers tend to be added in large amounts when the viscosity is lowered to achieve good processability or when low-hardness products are manufactured. When the plasticizers are used in large amounts, however, they can bleed out on the surface depending on the level of compatibility with the rubber materials, causing many problems such as sticky products, deteriorated appearance and bonding failure. In particular, such problems are more likely in the case of elastomer blending because the two rubbers have different levels of compatibility. Under these circumstances, elastomer blending materials and modifiers capable of lowering the viscosity and hardness and having excellent anti-bleeding properties are strongly required in the fields of various industrial materials including tires.
[Non-Patent Document 1] Journal of The Society of Rubber Industry, Japan, Vol. 72, September issue
JP 59 126443 A relates to a rubber composition for tires which is obtained by blending 100 parts by weight of a rubber composition (A) comprising 30-70 parts by weight of polyisoprene and 70-30 parts by weight of polybutadiene with 70-90 parts by weight of carbon black (B) and 5-15 parts by weight of a compound selected from a sebacic acid derivative, an adipic acid derivative, an azelaic acid derivative and a ricinoleic acid derivative (C).
Macromol. Biosci. 2007, 7, 798-803 relates to the enzymatic preparation of high-molecular-weight polyricinoleate having a weight-average molecular weight (Mw) of 100600. The polyricinoleate is said to have a good low temperature flexibility compared to natural rubber.

The present invention aims at solving the problems in the art as described above. It is therefore an object of the invention to provide rubber compositions capable of giving crosslinked rubber products having excellent flexibility.

The present inventors studied diligently to solve the aforesaid problems. They have then found that a rubber composition including a diene rubber component and a specific ricinoleic acid (co)polymer can give crosslinked rubber products having superior flexibility compared to conventional rubber materials. The present invention has been completed based on the finding.

In detail, rubber compositions of the present invention are specified as follows.

A rubber composition according to the present invention comprises 50 to 99 parts by weight of a diene rubber (A) and 50 to 1 part by weight of a ricinoleic acid (co)polymer (B) having a weight average molecular weight of not less than 20, 000 according to GPC (wherein the total of the diene rubber (A) and the ricinoleic acid (co) polymer (B) is 100 parts by weight) wherein the ricinoleic acid (co)polymer (B) is obtained by polymerizing a ricinoleic acid ester derivative, or polymerizing a ricinoleic acid ester derivative and a 12-hydroxystearic acid ester derivative.

The rubber composition preferably further comprises 0.1 to 5 parts by weight of a sulfur compound (C) based on 100 parts by weight of the diene rubber (A) and the ricinoleic acid (co)polymer (B) combined.

In a preferred embodiment, the rubber composition further comprises 0.1 to 15 parts by weight of a vulcanization accelerator (D) based on 100 parts by weight of the diene rubber (A) and the ricinoleic acid (co)polymer (B) combined.

The diene rubber (A) in the rubber composition is preferably at least one selected from the group consisting of natural rubbers (NR), styrene butadiene rubbers (SBR) and butadiene rubbers (BR).

The rubber composition preferably further comprises 10 to 200 parts by weight of a reinforcing agent (E) based on 100 parts by weight of the diene rubber (A) and the ricinoleic acid (co)polymer (B) combined.

The rubber composition is suitably crosslinked to a crosslinked rubber product.

The crosslinked rubber product is preferably a shaped rubber article, an automobile part or a tire part.

The tire part comprising the crosslinked rubber product is preferably a tire tread, a side wall or a bead filler.

The tire part is preferably a tire.

### ADVANTAGEOUS EFFECTS OF THE INVENTION

The rubber compositions according to the present invention can give crosslinked rubber products having excellent flexibility.

When the diene rubber (A) in the rubber compositions is a natural rubber (NR) or a styrene butadiene rubber (SBR), the rubber compositions show a low viscosity and give crosslinked rubber products having excellent flexibility and good low-temperature properties.

When the diene rubber (A) is a butadiene rubber (BR), the rubber compositions show a low viscosity and give crosslinked rubber products having excellent flexibility and good mechanical properties.

### PREFERRED EMBODIMENTS FOR CARRYING OUT THE INVENTION

The rubber compositions and the crosslinked rubber products according to the present invention will be described in detail with respect to each component.

### [Diene rubbers (A)]

Examples of the diene rubbers (A) include styrene butadiene rubbers, butadiene rubbers, natural rubbers, isoprene rubbers, styrene/isoprene copolymer rubbers and butadiene/isoprene copolymer rubbers. These rubbers may be used singly, or two or more kinds may be used in combination.

In particular, the diene rubber (A) is preferably at least one selected from the group consisting of natural rubbers (NR), styrene butadiene rubbers (SBR) and butadiene rubbers (BR).

When the diene rubber (A) is a natural rubber or a styrene butadiene rubber (SBR), the obtainable rubber compositions show a low viscosity and give crosslinked rubber products having excellent flexibility and good low-temperature properties. By selecting natural rubbers as the diene rubbers (A), rubber compositions containing large amounts of components from nonpetroleum resources may be obtained.

When the diene rubber (A) is a butadiene rubber (BR), the obtainable rubber compositions show a low viscosity and give crosslinked rubber products having excellent flexibility and good mechanical properties.

### [Ricinoleic acid (co)polymers (B)]

The ricinoleic acid (co)polymers (B) in the invention have a weight average molecular weight of not less than 20,000, and preferably in the range of 40,000 to 300,000 according to GPC (gel permeation chromatography).

The ricinoleic acid (co)polymers (B) having the above weight average molecular weight may be synthesized by lipase-catalyzed polymerization of a ricinoleic acid (12-hydroxy-cis-9-octadecenoic acid) ester derivative as illustrated in Reaction Formula (I) below, or lipase-catalyzed polymerization of a ricinoleic acid ester derivative and a 12-hydroxystearic acid ester derivative (for example, methyl 12-hydroxystearate).

The polymerization of a ricinoleic acid ester derivative alone gives a homopolymer polyricinoleic acid as the ricinoleic acid (co)polymer (B). The polymerization of a ricinoleic acid ester derivative together with a 12-hydroxystearic acid ester derivative gives a polyricinoleic acid copolymer as the ricinoleic acid (co)polymer (B).

The ricinoleic acid ester is preferably methyl ricinoleate, in which case the polymerization reaction takes place favorably and yields a ricinoleic acid (co)polymer having a high molecular weight.

The feeding molar ratio of the methyl ricinoleate derivative and the methyl 12-hydroxystearate derivative (methyl ricinoleate derivative/methyl 12-hydroxystearate derivative) is preferably in the range of 100/0 to 20/80. If the feeding molar ratio is outside this range, the crosslinking reactivity may be lowered and the rubber elasticity may be deteriorated.

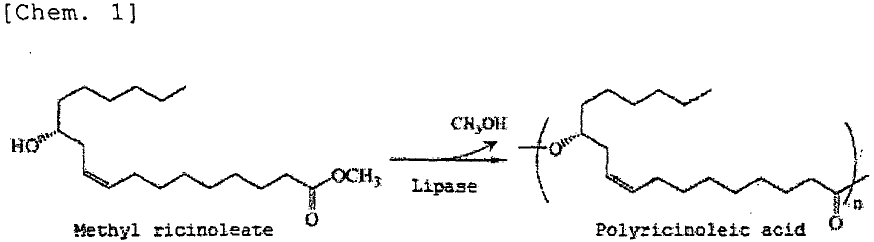

### (Reaction Formula I)

A preferred lipase is an immobilized lipase from Burkholderia cepacia (for example, Lipase PS-C (trade name) and PS-D (trade name) manufactured by Sigma-Aldrich Japan). Such lipases are resistant to deactivation even at high temperatures, and the reaction temperature may be increased to 90°C. Preferred reaction conditions are such that the reaction is performed under bulk conditions by a batch process in a reactor equipped with a stirrer.

The reaction time may vary depending on conditions such as the catalyst concentration and the polymerization temperature, but is usually in the range of 4 to 7 days.

The lipase-catalyzed polymerization is a reversible reaction. To carry out the polymerization efficiently, it is preferable that the by-produced alcohol is removed successively as illustrated in Reaction Formula (I). In detail, the synthesis reaction may be performed while the reaction system is held at a reduced pressure or moisture-absorbing agents such as synthetic zeolites (for example, molecular sieve 4A) are present in the reaction system without contact. These conditions permit the polymerization reaction to take place simply and readily, and ricinoleic acid (co)polymers of high molecular weight may be synthesized efficiently.

### [Rubber compositions]

The rubber compositions according to the present invention contain the diene rubber (A) at 50 to 99 parts by weight, preferably 60 to 99 parts by weight, and more preferably 70 to 99 parts by weight (based on the total of the diene rubber (A) and the ricinoleic acid (co)polymer (B) being 100 parts by weight).

The rubber compositions of the invention contain the ricinoleic acid (co)polymer (B) at 50 to 1 part by weight, preferably 40 to 1 part by weight, and more preferably 40 to 1 part by weight (based on 100 parts by weight of the diene rubber (A) and the ricinoleic acid (co)polymer (B) combined).

### [Sulfur compounds (C)]

The rubber compositions may preferably contain a sulfur compound (C) in an amount of 0.01 to 5 parts by weight, more preferably 0.05 to 5.0 parts by weight, and still more preferably 0.1 to 4.0 parts by weight based on 100 parts by weight of the diene rubber (A) and the ricinoleic acid (co)polymer (B) combined. The rubber compositions containing the sulfur compound (C) in this amount show excellent crosslinking properties and give crosslinked rubber products having reduced bloom.

The sulfur compounds include sulfur, sulfur chloride, sulfur dichloride, morpholine disulfide, alkylphenol disulfide, tetramethylthiuram disulfide and selenium dithiocarbamate. Of these, sulfur and tetramethylthiuram disulfide are preferred.

### [Vulcanization accelerators (D)]

The rubber compositions of the invention may contain a vulcanization accelerator (D) in addition to the diene rubber (A) and the ricinoleic acid (co)polymer (B).

The content of the vulcanization accelerators (D) is preferably in the range of 0.1 to 15 parts by weight, and more preferably 0.5 to 10 parts by weight based on 100 parts by weight of the diene rubber (A) and the ricinoleic acid (co)polymer (B) combined. The rubber compositions containing the vulcanization accelerator (D) in this amount show excellent crosslinking properties and give crosslinked rubber products having reduced bloom.

Examples of the vulcanization accelerators (D) include thiazole compounds such as N-cyclohexyl-2-benzothiazole sulphenamide, N-oxydiethylene-2-benzothiazole sulphenamide, N,N'-diisopropyl-2-benzothiazole sulphenamide, 2-mercaptobenzothiazole (for example, Sanceler M manufactured by SANSHIN CHEMICAL INDUSTRY CO., LTD.), 2-(4-morpholinodithio)benzothiazole (for example, Nocceler MDB-P manufactured by SANSHIN CHEMICAL INDUSTRY CO., LTD.), 2-(2,4-dinitrophenyl)mercaptobenzothiazole, 2-(2,6-diethyl-4-morpholinothio)benzothiazole and dibenzothiazyl disulfide; guanidine compounds such as diphenylguanidine, triphenylguanidine and diorthotolylguanidine; aldehyde amine compounds such as acetaldehyde-aniline condensate and butylaldehyde-aniline condensate; imidazoline compounds such as 2-mercaptoimidazoline; thiourea compounds such as diethylthiourea and dibutylthiourea; thiuram compounds such as tetramethylthiuram monosulfide and tetramethylthiuram disulfide; dithioic acid salts such as zinc dimethyldithiocarbamate, zinc diethyldithiocarbamate, zinc dibutyldithiocarbamate (for example, Sanceler BZ manufactured by SANSHIN CHEMICAL INDUSTRY CO., LTD.) and tellurium diethyldithiocarbamate; thiourea compounds such as ethylenethiourea (for example, Sanceler 22-C manufactured by SANSHIN CHEMICAL INDUSTRY CO. , LTD.) and N,N'-diethylthiourea; xanthate compounds such as zinc dibutylxanthate; and others such as zinc oxide (for example, META-Z102 manufactured by Inoue Calcium Corporation).

### [Reinforcing agents (E)]

The rubber compositions of the invention preferably further contain a reinforcing agent (E).

The content of the reinforcing agents (E) is preferably in the range of 10 to 200 parts by weight, more preferably 20 to 180 parts by weight, and still more preferably 30 to 160 parts by weight based on 100 parts by weight of the diene rubber (A) and the ricinoleic acid (co)polymer (B) combined. The reinforcing agents (E) contained in this amount in the rubber compositions provide increased mechanical properties such as tensile strength, tear strength and abrasion resistance of the rubber compositions. The reinforcing agents in the above amount also increase kneading processability of the rubber compositions and mechanical properties of the obtainable crosslinked rubber products, and reduce permanent set of the obtainable crosslinked rubber products.

Examples of the reinforcing agents (E) include carbon blacks, silicas, activated calcium carbonates, light calcium carbonates, heavy calcium carbonates, talcs, silicic acids and clays.

In particular, carbon black is suitably used when the crosslinked rubber products are expected to be effectively reinforced to show good abrasion resistance and break strength. The amount thereof is preferably in the range of 20 to 120 parts by weight, and more preferably 30 to 110 parts by weight based on 100 parts by weight of the diene rubber (A) and the ricinoleic acid (co)polymer (B) combined. The carbon blacks are not particularly limited, and known types commonly used in the rubber industry may be used depending on the use applications. For example, furnace carbon blacks having a nitrogen adsorption specific surface area of 50 to 200 m²/g and a DBP oil absorption of 80 to 200 ml/100 g are preferable, and FEF, HAF, ISAF and SAF classes may be preferably used. In particular, highly aggregated types are preferred.

The use of silicas may be suitable particularly in the case where the applications require low hysteresis loss of crosslinked rubber products (such as in fuel-efficient tires). The silicas include wet silicas, dry silicas and synthetic silicate silicas. Fine particulate silicas provide high reinforcing effects. Small particulate and highly aggregated types (high surface area, high oil absorption) have good dispersibility in rubbers and are particularly preferable in view of properties and processability. Highly dispersible silicas can be favorably dispersed in rubbers and are preferable in view of properties and processability. The average primary particle diameter of the silicas is preferably in the range of 5 to 60 µm, and particularly preferably 10 to 35 µm. The amount of the silicas is preferably in the range of 20 to 120 parts by weight, and more preferably 30 to 110 parts by weight based on 100 parts by weight of the diene rubber (A) and the ricinoleic acid (co)polymer (B) combined. To increase the reinforcing effects of the silicas as fillers, the silicas may be used in combination with known silane coupling agents. The silane coupling agents refer to compounds that have both a constitutional component such as alkoxysilyl group capable of reacting with the silica surface and a constitutional component such as polysulfide, mercapto group or epoxy group capable of reacting with rubbers, in particular with carbon-carbon double bonds. Examples of the silane coupling agents include bis(3-triethoxysilylpropyl)tetrasulfide, bis (3-triethoxysilylpropyl) disulfide and 3-mercaptopropyltrimethoxysilane. When the silica is used as a filler, it is a preferred embodiment that at least 1 part by weight of the fillers is the silica and the fillers include 0 .5 to 20 wt% of the silane coupling agent relative to the silica. According to this embodiment, the silica achieves higher dispersibility and the bonding rate between the silica and the rubber is increased, resulting in improvements in break strength, abrasion resistance and low-hysteresis loss properties.

In an embodiment, the carbon black and silica may be used together in the range of 10 to 200 parts by weight based on 100 parts by weight of the diene rubber (A) and the ricinoleic acid (co)polymer (B) combined. According to this embodiment, abrasion resistance, break strength and low-hysteresis loss properties may be balanced at a high level.

### [Vulcanization auxiliaries (F)]

The rubber compositions of the invention may contain a vulcanization auxiliary (E) as required. Examples of the vulcanization auxiliaries include magnesium oxide and zinc oxide (for example, META-Z102 manufactured by Inoue Calcium Corporation). The amount thereof is usually in the range of 1 to 20 parts by weight based on 100 parts by weight of the diene rubber (A) and the ricinoleic acid (co)polymer (B) combined.

### [Other components]

The rubber compositions of the invention may contain various additives such as softeners, anti-aging agents (stabilizers), processing aids, activators, moisture-absorbing agents, foaming agents and foaming auxiliaries depending on the purposes.

### [Softeners]

The rubber compositions of the invention may contain a softener depending on the applications. Examples of the softeners include petroleum softeners such as process oils (for example, aromatic oils such as Diana Process Oil AC-12, Diana Process Oil AC-460 and Diana Process Oil AC-16 manufactured by Idemitsu Kosan Co., Ltd., and Mobilsol series K, 22 and 130 manufactured by Exxon Mobil Corporation; naphthene oils such as Diana Process Oil NS-24, Diana Process Oil NS-100, Diana Process Oil NM-26, Diana Process Oil NM-280 and Diana Process Oil NP-24 manufactured by Idemitsu Kosan Co. , Ltd., and Naplex 38 manufactured by Exxon Mobil Corporation; and paraffin oils such as Diana Process Oil PW-90, Diana Process Oil PW-380, Diana Process Oil PS-32, Diana Process Oil PS-90 and Diana Process Oil PS-430 manufactured by Idemitsu Kosan Co. , Ltd., and Naplex 32 manufactured by Exxon Mobil Corporation), lubricating oils, liquid paraffins, petroleum asphalts and vaselines; coal tar softeners such as coal tars and coal tar pitches; fatty oil softeners such as castor oil, linseed oil, rapeseed oil, soybean oil and coconut oil; waxes such as bees wax, carnauba wax and lanolin; fatty acids and salts thereof such as ricinoleic acid, palmitic acid, stearic acid, barium stearate, calcium stearate and zinc laurate; naphthenic acid, pine oil, rosin and derivatives thereof; synthetic polymer substances such as terpene resins, petroleum resins, atactic polypropylenes and coumarone indene resins; ester softeners such as dioctyl phthalate, dioctyl adipate and dioctyl sebacate; microcrystalline waxes, liquid polybutadienes, modified liquid polybutadienes, liquid thiokols, hydrocarbon-based synthetic lubricating oils, tall oils and rubber substitutes (factices). Of these, the petroleum softeners are preferable, and the process oils are particularly preferable.

The amount of the softeners may be determined appropriately depending on the applications, but is usually not more than 200 parts by weight, preferably not more than 150 parts by weight, and still more preferably not more than 130 parts by weight based on 100 parts by weight of the diene rubber (A) and the ricinoleic acid (co)polymer (B) combined.

### [Anti-aging agents]

The rubber compositions of the invention may contain an anti-aging agent to extend the life of rubber products produced therefrom. Known anti-aging agents may be used, with examples including amine anti-aging agents, phenol anti-aging agents and sulfur anti-aging agents.

Specific examples include aromatic secondary amine anti-aging agents such as phenylbutylamine and N,N-di-2-naphthyl-p-phenylenediamine; phenol anti-aging agents such as dibutylhydroxytoluene and tetrakis[methylene(3,5-di-t-butyl-4-hydroxy) hydrocinnamato]methane; thioether anti-aging agents such as bis[2-methyl-4-(3-n-alkylthiopropionyloxy)-5-t-butylphenyl] sulfide; dithiocarbamate anti-aging agents such as nickel dibutyldithiocarbamate; and sulfur anti-aging agents such as zinc salts of 2-mercaptobenzoylimidazole and 2-mercaptobenzimidazole, dilauryl thiodipropionate and distearyl thiodipropionate.

The anti-aging agents may be used singly, or two or more kinds may be used in combination. The amount of the anti-aging agents is usually in the range of 0.3 to 10 parts by weight, preferably 0.5 to 7.0 parts by weight, and more preferably 0.7 to 5.0 parts by weight based on 100 parts by weight of the component (A). The anti-aging agents contained in this amount reduce the inhibition of vulcanization of the rubber compositions and thereby reduce the bloom from the obtainable crosslinked rubber products.

### [Activators]

The rubber compositions of the invention may contain a single or two or more activators as required. Examples of the activators include amines such as di-n-butylamine, dicyclohexylamine, monoethanolamine, Acting B (manufactured by Yoshitomi Seiyaku K.K.) and Acting SL (manufactured by Yoshitomi Seiyaku K.K.); amine activators such as diethylene glycol, polyethylene glycol, lecithin, triallyl trimellitate and zinc compounds of aliphatic or aromatic carboxylic acids (for example, Struktol activator 73, Struktol IB 531 and Struktol FA541 manufactured by Schill & Seilacher); zinc peroxide-modified activators such as ZEONET ZP (manufactured by ZEON CORPORATION); octadecyltrimethylammonium bromide, synthetic hydrotalcite and special quaternary ammonium compounds (for example, Arquad 2HF (manufactured by LION AKZO Co., Ltd.)). Of these, Arquad 2HF is preferred. The amount of the activators is in the range of 0.2 to 10 parts by weight, preferably 0.3 to 5 parts by weight, and more preferably 0.5 to 4 parts by weight based on 100 parts by weight of the diene rubber (A) and the ricinoleic acid (co)polymer (B).

### [Other rubber components]

The rubber compositions of the invention may contain rubber components other than the diene rubbers (A) and the ricinoleic acid (co)polymers (B) while still achieving the objects of the invention. The amount of such rubber components is preferably 20 parts by weight or more based on 100 parts by weight of the diene rubber (A) and the ricinoleic acid (co)polymer (B) combined.

### [Foaming agents]

The rubber compositions of the invention may contain a single or two or more foaming agents as required. Examples of the foaming agents include organic foaming agents and microballoons. The amount thereof is suitably 1 to 10 parts by weight, and preferably 1 to 5 parts by weight based on 100 parts by weight of the diene rubber (A) and the ricinoleic acid (co)polymer (B) combined. The foaming agents used in this amount give foamed rubber compositions having a more appropriate expansion ratio.

The organic foaming agents are not particularly limited. Nitroso compounds, azo compounds and sulfonylhydrazide compounds are preferred, and azo compounds are particularly preferred. The azo compounds include azodicarbonamide, azobisisobutyronitrile and diazoaminobenzene. The nitroso compounds include N,N'-dinitrosopentamethylenetetramine and N,N'-dimethyl-N,N'-dinitrosoterephthalamide. The sulfonylhydrazide compounds include benzenesulfonylhydrazide and toluenesulfonylhydrazide. Further, other organic foaming agents such as p-toluenesulfonylazide, 4,4'-diphenylsulfonylazide and 4, 4'-oxybisbenzosulfonylhydrazide may be used. These foaming agents may be used singly, or two or more kinds may be used in combination. Azodicarbonamide is particularly preferable from the viewpoint of the amount of gas generated by increasing the temperature.

The microballoons are fine hollow balloons of thermoplastic resins or thermosetting resins. In the present invention, the organic foaming agents are preferably used because the microballoons leave the polymer shells in the foamed rubbers.

### [Moisture-absorbing agents]

The rubber compositions of the invention may contain a moisture-absorbing agent as required to remove water present in the carbon blacks.

Examples of the moisture-absorbing agents include calcium oxide, silica gel, sodium sulfate, molecular sieve 4A, zeolite and white carbon. These may be used singly, or two or more kinds may be used in combination. Of these, calcium oxide is preferable. The amount of the moisture-absorbing agents is 0.5 to 15 parts by weight, preferably 1.0 to 12 parts by weight, and more preferably 1.0 to 10 parts by weight based on 100 parts by weight of the rubber composition.

### [Processes for producing rubber compositions]

The rubber compositions of the invention may be produced from the specified amounts in parts by weight of the diene rubber (A), the ricinoleic acid (co)polymer (B) and optionally other components described above, according to conventional rubber compounding processes.

For example, the diene rubber (A), the ricinoleic acid (co)polymer (B) and optionally the sulfur compound (C), the reinforcing agent (E) and other components are kneaded by means of an internal mixer such as a Banbury mixer, a kneader or an inter mixer, and a roll mixer at 80 to 170°C for 3 to 10 minutes. Thereafter, the kneaded product, optionally together with the additional sulfur compound (C) alone or the sulfur compound (C) and the vulcanization accelerator (D) or vulcanization auxiliary, is kneaded in a roll mixer such as an open roll mixer or a kneader at a roll temperature of 40 to 80°C for 5 to 30 minutes. The kneaded rubber composition (compounded rubber) is usually rolled in the form of ribbon or sheet. When the kneading in the internal mixer is performed at a low temperature, the sulfur compound (C), the vulcanization accelerator (D), the foaming agent and other components may be kneaded therein simultaneously.

### [Process for producing crosslinked rubber products]

The crosslinked rubber products of the invention may be manufactured by preliminarily shaping the rubber composition into a desired shape by various shaping methods using heating means such as extruders, calender rolls, presses, injection molding apparatuses, transfer molding apparatuses, hot air, glass bead fluidized beds, UHF (ultra high frequency electromagnetic waves), steam and LCM (molten salt bath); and crosslinking the shaped product by heat treatment simultaneously with the shaping or after the shaped product is placed in a vulcanization tank. The heat treatment may be performed in a heating tank using heating means such as HAV (hot air), PCM (glass bead fluidized bed), UHF (ultra high frequency electromagnetic waves), steam or LCM (molten salt bath). The heating (crosslinking) may be usually performed at 140 to 300°C, preferably 150 to 270°C, and more preferably 150 to 250°C, for 0.5 to 30 minutes, preferably 0.5 to 20 minutes, and more preferably 0.5 to 15 minutes. The shaping and crosslinking may involve a mold or may be carried out without a mold. Without a mold, the rubber composition is usually shaped and crosslinked continuously.

### [Uses of crosslinked rubber products]

The crosslinked rubber products of the invention are produced from the crosslinkable rubbers as described above, and may be foamed depending on the use applications. Because the rubber compositions have excellent shaping processability and the obtainable crosslinked rubber products have good flexibility, they are very useful as rubber products in various fields. The uses of the crosslinked rubber products include shaped rubber articles, automobile parts and tire parts. The tire parts include tire treads, side walls and bead fillers. Preferred tire parts are tires.

### EXAMPLES

The present invention will be described in greater detail hereinbelow by presenting examples without limiting the scope of the invention. Properties of ricinoleic acid (co)polymers and rubber compositions obtained were measured and evaluated by the following methods.

### [Weight average molecular weight]

The weight average molecular weight of ricinoleic acid (co)polymers was determined by GPC relative to polystyrene standards.

The equipment and measurement conditions are as follows.
Pump: 880-PU (JASCO Corporation)
Columns: Shodex K-804L and K-800D (SHOWA DENKO K.K.)
Detector: 830-RI (JASCO Corporation)
Recorder: 807IT (JASCO Corporation)
Eluting solution: chloroform (containing 1% of ethanol)
Measurement conditions:
   flow rate 1.0 ml/min
   injection amount 200 µl (2 mg/ml)
   temperature: 25°C
Calibration standard samples: Special polystyrene standards (Chemco Scientific Co., Ltd.)
(Mw = 600,000, Mw = 50,000, Mw = 17,500, Mw = 9,000, Mw = 2,200, Mw = 906)

### [Production Example 1]

### (Production of ricinoleic acid polymer P-1)

Ricinoleic acid polymer (P-1) for use in Example 1 was synthesized by a batch process in a 10 ml test tube containing a stirrer. The test tube was charged with 500 mg of methyl ricinoleate (manufactured by Sigma-Aldrich Japan) and 150 mg of immobilized lipase from Burkholderia cepacia (Lipase PS-C manufactured by Sigma-Aldrich Japan). They were reacted together with stirring at 80°C for 7 days while removing a condensate (methanol) from the reaction system through a tube filled with molecular sieve 4A that was attached at the top of the test tube. After the reaction for 7 days, 8 ml of chloroform was added to the ricinoleic acid (co)polymer crude product (containing the immobilized lipase) obtained. The ricinoleic acid (co)polymer was dissolved therein and was filtered to remove the immobilized lipase that was insoluble in chloroform. The chloroform was concentrated with use of an evaporator, and approximately 1 ml of dense ricinoleic acid (co) polymer was obtained. The polymer solution was dropped to poor solvent methanol to precipitate a high molecular weight ricinoleic acid polymer and the liquid was decanted. As a result, 400 mg of the target ricinoleic acid polymer (weight average molecular weight: 52,000) was obtained as a precipitate. The above procedures were repeated, and a total of 5 g of the ricinoleic acid polymer was produced. The polymerization conditions and the weight average molecular weight of the polymer are set forth in Table 1.

### [Production Example 2]

### (Production of ricinoleic acid polymer P-2)

Ricinoleic acid polymer (P-2) for use in Examples 2, 3 and 5 to 9 was synthesized under the same conditions as those for the polymer P-1, except that the amount of the enzyme as the catalyst was changed. The polymerization conditions and the weight average molecular weight of the polymer are set forth in Table 1.

### [Production Example 3]

### (Production of ricinoleic acid polymer P-3)

Ricinoleic acid polymer (P-3) for use in Example 4 was synthesized under the same conditions as those for the polymer P-2, except that immobilized lipase PS-C as the catalyst was altered to immobilized lipase PS-D. The polymerization conditions and the weight average molecular weight of the polymer are set forth in Table 1.

### [Production Example 4]

### (Production of ricinoleic acid copolymer P-4)

Ricinoleic acid copolymer (P-4) for use in Example 5 was synthesized under the same conditions as those for the polymer P-2, except that the monomer was changed from methyl ricinoleate to a monomer blend (an equimolar blend) of methyl ricinoleate and methyl 12-hydroxystearate. The polymerization conditions and the weight average molecular weight of the polymer are set forth in Table 1.

### [Production Example 5]

### (Production of ricinoleic acid polymer P-5)

Ricinoleic acid polymer (P-5) for use in Comparative Example 1 was synthesized under the same conditions as those for the polymer P-1, except that the monomer was changed from methyl ricinoleate to ricinoleic acid. The polymerization conditions and the weight average molecular weight of the polymer are set forth in Table 1.

Styrene butadiene rubber P-6 (Nipol 1502 manufactured by ZEON CORPORATION) was used in Examples 1 to 5 and Comparative Examples 1 and 2. Natural rubber P-7 (SMR CV60 from Malaysia) was used in Examples 6 and 7 and Comparative Examples 3 and 4. Butadiene rubber P-8 (Nipol 1220 manufactured by ZEON CORPORATION) was used in Examples 8 to 10 and Comparative Example 5. These commercially purchased products were used directly without purification. Properties of the polymers are set forth in Table 1.

[Table 1]

**Table 1**

| | Reaction temperature | Reaction time | Raw material (monomer) | Enzyme | Enzyme amount^{*1} | Weight average molecular weight |
|---|---|---|---|---|---|---|
| | (°C) | (days) | | | (wt%) | |
| P-1 | 80 | 7 | Methyl ricinoleate | Lipase PS-C | 30 | 52,000 |
| P-2 | 80 | 7 | Methyl ricinoleate | Lipase PS-C | 100 | 100,800 |
| P-3 | 80 | 7 | Methyl ricinoleate | Lipase PS-D | 100 | 201,100 |
| P-4 | 80 | 7 | Methyl ricinoleate/methyl 12-hydroxystearate | Lipase PS-C | 100 | 98,000 |
| P-5 | 80 | 7 | Ricinoleic acid | Lipase PS-C | 100 | 6,000 |
| P-6 | Nipol SBR 1502^{*2} manufactured by ZEON CORPORATION | | | | | |
| P-7 | Natural rubber SMR CV60^{*3} | | | | | |
| P-8 | Nipol BR 1220^{*4} manufactured by ZEON CORPORATION | | | | | |

*1: wt% relative to the raw material at 100%
*2: ML viscosity [ML (1+4) 100°C]: 52, specific gravity: 0.94, bonded styrene content: 23.5%
*3: ML viscosity [ML (1+4) 100°C]: 60
*4: ML viscosity [ML (1+4) 100°C]: 43, specific gravity: 0.9

Properties of rubber compositions (unvulcanized compositions and vulcanized compositions) were measured by the following methods.

### [Methods for measuring properties (unvulcanized compositions and vulcanized compositions)]

### [Compound viscosity (ML₁₊₄ (100°C))]

The viscosity was measured in accordance with JIS K6300 (1994).

### [Vulcanization behavior analysis]

The vulcanization rate tc (90) (minutes) was determined at 160°C in accordance with JIS K6300-2 (2001) using rotorless rheometer MDR2000P (MDR2000P) manufactured by Alpha Technologies.

Properties of crosslinked (vulcanized) rubber compositions were determined by the following methods.

### [Bleeding]

A test sample was a rubber sheet that had been vulcanized by thermal pressing at 160°C for a predetermined time. The test sample was stored at room temperature for 7 days, and the surface of the rubber sheet was observed to evaluate bleeding according to the following criteria. The samples graded BB or above passed the test.

AA: The surface condition of the rubber sheet was substantially the same as that immediately after the pressing. Nothing attached to the hand that touched the sheet surface.

BB: The rubber sheet surface had a little bleeding, and the color of the sheet surface had changed slightly. Bleeding attached slightly to the hand that touched the sheet surface.

CC: The rubber sheet surface had bleeding and was sticky to the touch.

### [Durometer A hardness (degrees)]

A test sample was a rubber sheet that had been vulcanized by thermal pressing at 160°C for a predetermined time. The test sample was tested with a durometer A hardness meter (JIS A hardness) in accordance with JIS K6253.

### [Tensile properties]

A test sample was a rubber sheet that had been vulcanized by thermal pressing at 160°C for a predetermined time. The test sample was tensile-tested at 25°C and a stress rate of 500 mm/min in accordance with JIS K6251 to determine the tensile modulus M 100% (MPa) and tensile strength TB (MPa) and elongation EB (%) at break.

### [Tensile product: [MPa·%]]

JIS K6251 is a general measure for the evaluation of properties of vulcanized rubber compositions. In accordance therewith, a tensile test was performed at 23°C and a stress rate of 500 mm/min. The tensile strength T_{B} and elongation E_{B} at break of the vulcanized sheets were multiplied together to give a tensile product.

### [Permanent set (PS)]

A test sample was punched out with a JIS No. 7 dumbbell from a 1 mm rubber sheet that had been vulcanized by thermal pressing at 160°C for a predetermined time. The test sample was 100% stretched at room temperature for 10 minutes. The residual strain after 10 minutes after the stress removal was measured.

### [Low-temperature flexibility (tanδ-Tg)]

A 10 mm x 30 mm x 2 mm rectangular sample was prepared from a rubber sheet that had been vulcanized by thermal pressing at 160°C for a predetermined time. The sample was tested at a strain of 0.5% and a frequency of 1 Hz with RDS-II manufactured by Rheometric Science to determine the temperature dispersion of viscoelasticity (from -70°C to 25°C). Herein, tanδ-Tg (°C) was derived by reading the peak top temperature in a temperature dependency curve of tanδ.

### [Example 1]

A preliminary mixture was prepared by mixing together 1 g of the ricinoleic acid polymer (P-1) from Production Example 1, 9 g of Nipol SBR 1502 (P-6) manufactured by ZEON CORPORATION, 4 g of ISAF carbon black (SEAST 6 manufactured by Tokai Carbon Co., Ltd.), 4 g of silica (Nipsil VN3 manufactured by TOSOH SILICA CORPORATION), 5 g of an aromatic process oil (Diana Process Oil AH-24 manufactured by Idemitsu Kosan Co., Ltd.), 0.4 g of a silane coupling agent (Si-69 manufactured by Degussa), 0.27 g of diethylene glycol (DEG), 0.3 g of two kinds of zinc oxides, and 0.2 g of stearic acid. The mixture was subjected to 6 times of rounding and 3 times of tailing by means of a 6 inch open roll mill (manufactured by Nippo Kouki K.K., roll rotations: front 15 rpm, rear 18 rpm) at a roll temperature of 50 °C and a roll interval of 0.2 mm, thereby producing a rubber composition. The rubber composition was rolled into a sheet. The compound viscosity (ML₁₊₄ (100°C)) was measured by the method as described in [Methods for measuring properties (unvulcanized compositions and vulcanized compositions)].

The composition was wound on the 6 inch open roll mill and was mixed with 0.17 g of Sanceler CM, 0.2 g of DPG and 0.14 g of sulfur. The mixture was given 3 cuts right and left, rounded 6 times and tailed 3 times at a roll interval of 0.2 mm. The kneaded rubber composition was rolled into a sheet. Properties of the unvulcanized rubber (vulcanization rate tc (90)) were measured by the method as described in [Methods for measuring properties (unvulcanized compositions and vulcanized compositions)].

The rolled sheet was pressed at 160°C for 15 minutes to give a 1 mm thick rubber sheet. The durometer A hardness of the rubber sheet was determined by the method as described in [Methods for measuring properties (unvulcanized compositions and vulcanized compositions)]. Further, rubber elasticity properties, in detail the permanent set (PS) and low-temperature flexibility, and bleeding were evaluated by the methods as described in [Methods for measuring properties (unvulcanized compositions and vulcanized compositions)]. The evaluation results are set forth in Table 2.

### [Example 2]

A rubber composition was prepared in the same manner as in Example 1, except that the ricinoleic acid polymer was changed from P-1 to P-2. Unvulcanized rubber properties and vulcanized rubber properties of the rubber composition were evaluated in the same manner as in Example 1. The results are set forth in Table 2.

### [Example 3]

A rubber composition was prepared in the same manner as in Example 1, except that the ricinoleic acid polymer was changed to P-2 and that the amounts thereof and of SBR P-6 were changed. Unvulcanized rubber properties and vulcanized rubber properties of the rubber composition were evaluated in the same manner as in Example 1. The results are set forth in Table 2.

### [Example 4]

A rubber composition was prepared in the same manner as in Example 1, except that the ricinoleic acid polymer was changed from P-1 to P-3. Unvulcanized rubber properties and vulcanized rubber properties of the rubber composition were evaluated in the same manner as in Example 1. The results are set forth in Table 2.

### [Example 5]

A rubber composition was prepared in the same manner as in Example 1, except that the ricinoleic acid (co)polymer was changed from P-1 to P-4. Unvulcanized rubber properties and vulcanized rubber properties of the rubber composition were evaluated in the same manner as in Example 1. The results are set forth in Table 2.

### [Comparative Example 1]

A rubber composition was prepared in the same manner as in Example 1, except that the ricinoleic acid polymer was changed from P-1 to P-5. Unvulcanized rubber properties and vulcanized rubber properties of the rubber composition were evaluated in the same manner as in Example 1. The results are set forth in Table 2.

### [Comparative Example 2]

A rubber composition was prepared in the same manner as in Example 1, except that the SBR P-6 was used singly and the amount of the ricinoleic acid (co)polymer was nil (0). Unvulcanized rubber properties and vulcanized rubber properties of the rubber composition were evaluated in the same manner as in Example 1. The results are set forth in Table 2.

### [Example 6]

A rubber composition was prepared in the same manner as in Example 1, except that the ricinoleic acid polymer was changed from P-1 to P-2 and that the SBR P-6 was changed to the natural rubber P-7. Unvulcanized rubber properties and vulcanized rubber properties of the rubber composition were evaluated in the same manner as in Example 1.

Separately, the rubber composition was rolled into a sheet, and the sheet was pressed at 160°C for 10 minutes to give a 1 mm thick rubber sheet. The durometer A hardness of the rubber sheet was determined by the method as described in [Methods for measuring properties (unvulcanized compositions and vulcanized compositions)]. Further, rubber elasticity properties, in detail the permanent set (PS) and low-temperature flexibility, and bleeding were evaluated by the methods as described hereinabove. The results are set forth in Table 3.

### [Example 7]

A rubber composition was prepared in the same manner as in Example 6, except that the amounts of the ricinoleic acid polymer P-2 and the natural rubber P-7 were changed. Unvulcanized rubber properties and vulcanized rubber properties of the rubber composition were evaluated in the same manner as in Example 6. The results are set forth in Table 3.

### [Comparative Example 3]

A rubber composition was prepared in the same manner as in Example 6, except that the natural rubber P-7 was used singly and the amount of the ricinoleic acid (co)polymer was nil (0). Unvulcanized rubber properties and vulcanized rubber properties of the rubber composition were evaluated in the same manner as in Example 6. The results are set forth in Table 3.

### [Comparative Example 4]

A rubber composition was prepared in the same manner as in Comparative Example 3, except that paraffin oil PS430 as a plasticizer was added at 10 phr based on 100 of the natural rubber. Unvulcanized rubber properties and vulcanized rubber properties of the rubber composition were evaluated in the same manner as in Comparative Example 3. The results are set forth in Table 3.

### [Example 8]

A rubber composition was prepared in the same manner as in Example 1, except that the ricinoleic acid polymer was changed from P-1 to P-2 and that the SBR P-6 was changed to butadiene rubber (BR) P-8. Unvulcanized rubber properties and vulcanized rubber properties of the rubber composition were evaluated in the same manner as in Example 1.

Separately, the rubber composition was rolled into a sheet, and the sheet was pressed at 160°C for 10 minutes to give a 1 mm thick rubber sheet. The durometer A hardness of the rubber sheet was determined by the method as described in [Methods for measuring properties (unvulcanized compositions and vulcanized compositions)]. Further, rubber elasticity properties, in detail the permanent set (PS) and low-temperature flexibility, and bleeding were evaluated by the methods as described hereinabove. The results are set forth in Table 4.

### [Example 9]

A rubber composition was prepared in the same manner as in Example 8, except that the amounts of the ricinoleic acid polymer P-2 and the BR P-8 were changed. Unvulcanized rubber properties and vulcanized rubber properties of the rubber composition were evaluated in the same manner as in Example 8. The results are set forth in Table 4.

### [Example 10]

A rubber composition was prepared in the same manner as in Example 8, except that the amounts of the ricinoleic acid polymer P-2 and the BR P-8 were changed. Unvulcanized rubber properties and vulcanized rubber properties of the rubber composition were evaluated in the same manner as in Example 8. The results are set forth in Table 4.

### [Comparative Example 5]

A rubber composition in Comparative Example 5 was prepared in the same manner as in Example 8, except that the BR P-8 was used singly and the amount of the ricinoleic acid (co)polymer was nil (0). Unvulcanized rubber properties and vulcanized rubber properties of the rubber composition were evaluated in the same manner as in Example 8. The results are set forth in Table 4.

[Table 2]

**Table 2**

| | Ex. 1 | Ex. 2 | Ex. 3 | Ex. 4 | Ex. 5 | Comp. Ex. 1 | Comp. Ex. 2 |
|---|---|---|---|---|---|---|---|
| (Amounts) | | | | | | | |
| Polymer | P-1 | P-2 | P-2 | P-3 | P-4 | P-5 | |
| /phr | 10 | 10 | 30 | 10 | 10 | 10 | |
| Polymer | P-6 | P-6 | P-6 | P-6 | P-6 | P-6 | P-6 |
| /phr | 90 | 90 | 70 | 90 | 90 | 90 | 100 |
| Two kinds of zinc oxides | 3 | 3 | 3 | 3 | 3 | 3 | 3 |
| Stearic acid | 2 | 2 | 2 | 2 | 2 | 2 | 2 |
| SEAST 6 | 40 | 40 | 40 | 40 | 40 | 40 | 40 |
| Nipsil VN3 | 40 | 40 | 40 | 40 | 40 | 40 | 40 |
| AH-24 | 50 | 50 | 50 | 50 | 50 | 50 | 50 |
| Si-69 | 4 | 4 | 4 | 4 | 4 | 4 | 4 |
| DEG | 2.7 | 2.7 | 2.7 | 2.7 | 2.7 | 2.7 | 2.7 |
| Sanceler CM | 1.7 | 1.7 | 1.7 | 1.7 | 1.7 | 1.7 | 1.7 |
| DPG | 2 | 2 | 2 | 2 | 2 | 2 | 2 |
| Sulfur | 1.4 | 1.4 | 1.4 | 1.4 | 1.4 | 1.4 | 1.4 |
| (Unvulcanized rubber properties) | | | | | | | |
| ML₁₊₄ (100°C) | 26 | 26 | 20 | 26 | 26 | 27 | 29 |
| TC 90 (min) | 10.8 | 10.9 | 10.5 | 10.8 | 11.1 | 11.6 | 10.4 |
| (Vulcanized rubber properties) | | | | | | | |
| Hardness (Duro-A) | 56 | 57 | 50 | 56 | 59 | 60 | 61 |
| PS (%) | 2.8 | 2.6 | 2.9 | 2.5 | 3 | 3.3 | 2.8 |
| Tanδ-Tg (°C) | -44.3 | -44 | -46.1 | -44 | -44 | -43.5 | -43.5 |
| Bleeding | AA | AA | AA | AA | AA | CC | AA |

[Table 3]

**Table 3**

| | Ex. 6 | Ex. 7 | Comp. Ex. 3 | Comp . Ex. 4 |
|---|---|---|---|---|
| (Amounts) | | | | |
| Polymer | P-2 | P-2 | | |
| /phr | 10 | 30 | | |
| Polymer | P-7 | P-7 | P-7 | P-7 |
| /phr | 90 | 70 | 100 | 100 |
| Two kinds of zinc oxides | 3 | 3 | 3 | 3 |
| Stearic acid | 2 | 2 | 2 | 2 |
| SEAST 6 | 40 | 40 | 40 | 40 |
| Nipsil VN3 | 40 | 40 | 40 | 40 |
| AH-24 | 50 | 50 | 50 | 50 |
| PS430 | | | | 10 |
| Si-69 | 4 | 4 | 4 | 4 |
| DEG | 2.7 | 2.7 | 2.7 | 2.7 |
| Sanceler CM | 1.7 | 1.7 | 1.7 | 1.7 |
| DPG | 2 | 2 | 2 | 2 |
| Sulfur | 1.4 | 1.4 | 1.4 | 1.4 |
| (Unvulcanized rubber properties) | | | | |
| ML₁₊₄ (100°C) | 22 | 19 | 24 | 22 |
| TC 90 (min) | 4.25 | 4.02 | 4.99 | 4.81 |
| (Vulcanized rubber properties) | | | | |
| Hardness (Duro-A) | 61 | 56 | 64 | 61 |
| PS (%) | 2.8 | 2.5 | 3.3 | 3.3 |
| Tanδ-Tg (°C) | -56.8 | -58.1 | -56 | -55 |
| Bleeding | AA | AA | AA | CC |

[Table 4]

**Table 4**

| | Ex. 8 | Ex. 9 | Ex. 10 | Comp.Ex.5 |
|---|---|---|---|---|
| (Amounts) | | | | |
| Polymer | P-2 | P-2 | P-2 | |
| /phr | 10 | 30 | 50 | |
| Polymer | P-8 | P-8 | P-8 | P-8 |
| /phr | 90 | 70 | 50 | 100 |
| Two kinds.of zinc oxides | 3 | 3 | 3 | 3 |
| Stearic acid | 2 | 2 | 2 | 2 |
| SEAST 6 | 40 | 40 | 40 | 40 |
| Nipsil VN3 | 40 | 40 | 40 | 40 |
| AH-24 | 50 | 50 | 50 | 50 |
| Si-69 | 4 | 4 | 4 | 4 |
| DEG | 2.7 | 2.7 | 2.7 | 2.7 |
| Sanceler CM | 1.7 | 1.7 | 1.7 | 1.7 |
| DPG | 2 | 2 | 2 | 2 |
| Sulfur | 1.4 | 1.4 | 1.4 | 1.4 |
| (Unvulcanized rubber properties) | | | | |
| ML₁₊₄ (100°C) | 64 | 55 | 48 | 68 |
| TC 90 (min) | 4.76 | 4.31 | 4.11 | 5.89 |
| (Vulcanized rubber properties) | | | | |
| Hardness (Duro-A) | 58 | 53 | 47 | 61 |
| M100 (MPa) | 1.81 | 1.75 | 1.7 | 1.81 |
| TB (MPa) | 13.9 | 14.6 | 14.4 | 12.5 |
| EB (%) | 490 | 550 | 550 | 450 |
| Tensile product (MPa·%) | 6811 | 8030 | 7920 | 5625 |
| PS (%) | 1.6 | 1.5 | 1.6 | 1.9 |
| Bleeding | AA | AA | AA | AA |

## Claims

1. A rubber composition comprising 50 to 99 parts by weight of a diene rubber (A) and 50 to 1 part by weight of a ricinoleic acid (co)polymer (B) having a weight average molecular weight of not less than 20,000 according to GPC (gel permeation chromatography) (wherein the total of the diene rubber (A) and the ricinoleic acid (co) polymer (B) is 100 parts by weight),
wherein the ricinoleic acid (co)polymer (B) is obtained by polymerizing a ricinoleic acid ester derivative, or polymerizing a ricinoleic acid ester derivative and a 12-hydroxystearic acid ester derivative.

2. The rubber composition according to claim 1, which further comprises 0.1 to 5 parts by weight of a sulfur compound (C) based on 100 parts by weight of the diene rubber (A) and the ricinoleic acid (co)polymer (B) combined.

3. The rubber composition according to claim 2, which further comprises 0.1 to 15 parts by weight of a vulcanization accelerator (D) based on 100 parts by weight of the diene rubber (A) and the ricinoleic acid (co)polymer (B) combined.

4. The rubber composition according to any one of claims 1 to 3, wherein the diene rubber (A) is at least one selected from the group consisting of natural rubbers (NR), styrene butadiene rubbers (SBR) and butadiene rubbers (BR).

5. The rubber composition according to any one of claims 1 to 4, which further comprises 10 to 200 parts by weight of a reinforcing agent (E) based on 100 parts by weight of the diene rubber (A) and the ricinoleic acid (co)polymer (B) combined.

6. A crosslinked rubber product obtained by crosslinking the rubber composition described in any one of claims I to 5.

7. A shaped rubber article comprising the crosslinked rubber product described in claim 6.

8. An automobile part comprising the crosslinked rubber product described in claim 6.

9. A tire part comprising the crosslinked rubber product described in claim 6.

10. The tire part according to claim 9, wherein the tire part comprising the crosslinked rubber product is a tire tread.

11. The tire part according to claim 9, wherein the tire part comprising the crosslinked rubber product is a side wall.

12. The tire part according to claim 9, wherein the tire part comprising the crosslinked rubber product is a bead filler.

13. A tire comprising the tire part described in any one of claims 9 to 12.

## Patentansprüche

1. Kautschukzusammensetzung, die 50 bis 99 Gew.-Teile eines Dien-Kautschuks (A) und 50 bis 1 Gew.-Teil(e) eines Rizinolsäure-(Co)polymers (B) mit einem gewichtsgemittelten Molekulargewicht von nicht weniger als 20.000 gemäss GPC (Gelpermeationschromatografie) (wobei die Gesamtheit des Dien-Kautschuks (A) und des Rizinolsäure-(Co)polymers (B) 100 Gew.-Teile ist) umfasst,
wobei das Rizinolsäure-(Co)polymer (B) durch Polymerisieren eines Rizinolsäureesterderivats oder durch Polymerisieren eines Rizinolsäureesterderivats und eines 12-Hydroxystearinsäureesterderivats erhalten wird.

2. Kautschukzusammensetzung gemäss Anspruch 1, die weiterhin 0,1 bis 5 Gew.-Teile einer Schwefelverbindung (C) auf Basis von 100 Gew.-Teilen des kombinierten Dienkautschuks (A) und des Rizinolsäure-(Co)polymers (B) umfasst.

3. Kautschukzusammensetzung gemäss Anspruch 2, die weiterhin 0,1 bis 15 Gew.-Teile eines Vulkanisationsbeschleunigers (D) auf Basis von 100 Gew.-Teilen des kombinierten Dien-Kautschuks (A) und des Rizinolsäure-(Co)polymers (B) umfasst.

4. Kautschukzusammensetzung gemäss irgendeinem der Ansprüche 1 bis 3, wobei der Dien-Kautschuk (A) mindestens einer ist, der aus der Gruppe bestehend aus natürlichem Kautschuk (NR), Styrol-Butadien-Kautschuk (SBR) und Butadien-Kautschuk (BR) ausgewählt ist.

5. Kautschukzusammensetzung gemäss irgendeinem der Ansprüche 1 bis 4, die weiterhin 10 bis 200 Gew.-Teile eines Verstärkungsmittels (E) auf Basis von 100 Gew.-Teilen des kombinierten Dien-Kautschks (A) und des Rizinolsäure-(Co)polymers (B) umfasst.

6. Vernetztes Kautschukerzeugnis, das durch Vernetzen der Kautschukzusammensetzung gemäss irgendeinem der Ansprüche 1 bis 5 erhalten wird.

7. Geformtes Kautschukerzeugnis, das das vernetzte Kautschukerzeugnis gemäss Anspruch 6 umfasst.

8. Automobilteil, das das vernetzte Kautschukerzeugnis gemäss Anspruch 6 umfasst.

9. Reifenteil, das das vernetzte Kautschukerzeugnis gemäss Anspruch 6 umfasst.

10. Reifenteil gemäss Anspruch 9, wobei das Reifenteil, das das vernetzte Kautschukerzeugnis umfasst, eine Reifenlauffläche ist.

11. Reifenteil gemäss Anspruch 9, wobei das Reifenteil, das das vernetzte Kautschukerzeugnis umfasst, eine Seitenwand ist.

12. Reifenteil gemäss Anspruch 9, wobei das Reifenteil, das das vernetzte Kautschukerzeugnis umfasst, ein Wulstfüller ist.

13. Reifen, der das Reifenteil gemäss irgendeinem der Ansprüche 9 bis 12 umfasst.

## Revendications

1. Composition de caoutchouc comprenant 50 parties à 99 parties en poids d'un caoutchouc diénique (A) et 50 parties à 1 partie en poids d'un (co)polymère d'acide ricinoléique (B) possédant un poids moléculaire moyen en poids supérieur ou égal à 20 000 par GPC (chromatographie par perméation sur gel) (dans laquelle le total du caoutchouc diénique (A) et du (co)polymère d'acide ricinoléique (B) représente 100 parties en poids),
dans laquelle le (co)polymère d'acide ricinoléique (B) est obtenu par la polymérisation d'un dérivé d'ester d'acide ricinoléique ou par la polymérisation d'un dérivé d'ester d'acide ricinoléique et d'un dérivé d'ester d'acide 12-hydroxystéarique.

2. Composition de caoutchouc selon la revendication 1, comprenant en outre 0,1 partie à 5 parties en poids d'un composé soufré (C) sur la base de 100 parties en poids du caoutchouc diénique (A) et du (co)polymère d'acide ricinoléique (B) combinés.

3. Composition de caoutchouc selon la revendication 2, comprenant en outre 0,1 partie à 15 parties en poids d'un accélérateur de vulcanisation (D) sur la base de 100 parties en poids du caoutchouc diénique (A) et du (co)polymère d'acide ricinoléique (B) combinés.

4. Composition de caoutchouc selon l'une quelconque des revendications 1 à 3, dans laquelle le caoutchouc diénique (A) est au moins un caoutchouc diénique choisi dans le groupe constitué des caoutchoucs naturels (NR), des caoutchoucs à base de styrène-butadiène (SBR) et des caoutchoucs à base de butadiène (BR).

5. Composition de caoutchouc selon l'une quelconque des revendications 1 à 4, comprenant en outre 10 parties à 200 parties en poids d'un agent de renforcement (E) sur la base de 100 parties en poids du caoutchouc diénique (A) et du (co)polymère d'acide ricinoléique (B) combinés.

6. Produit de caoutchouc réticulé, obtenu par la réticulation de la composition de caoutchouc décrite dans l'une quelconque des revendications 1 à 5.

7. Article en caoutchouc mis en forme, comprenant le produit de caoutchouc réticulé décrit dans la revendication 6.

8. Pièce pour automobile, comprenant le produit de caoutchouc réticulé décrit dans la revendication 6.

9. Partie de pneumatique, comprenant le produit de caoutchouc réticulé décrit dans la revendication 6.

10. Partie de pneumatique selon la revendication 9, dans laquelle la partie de pneumatique comprenant le produit de caoutchouc réticulé est une bande de roulement.

11. Partie de pneumatique selon la revendication 9, dans laquelle la partie de pneumatique comprenant le produit de caoutchouc réticulé est une paroi latérale.

12. Partie de pneumatique selon la revendication 9, dans laquelle la partie de pneumatique comprenant le produit de caoutchouc réticulé est un bourrage sur tringle.

13. Pneumatique comprenant la partie de pneumatique décrite dans l'une quelconque des revendications 9 à 12.
